# EUROPÄISCHE PATENTSCHRIFT

(11) **EP 0 504 497 B1**
(45) Veröffentlichungstag und Bekanntmachung des Hinweises auf die Patenterteilung: **07.12.1994**
(21) Anmeldenummer: 91122247.9
(22) Anmeldetag: 27.12.1991
(51) Int. Cl.: E04F 19/08, E04F 17/08, H02G 3/04

(54) **Installationskanal**
Installation channel
Canal d'installation

(30) Priorität: 18.03.1991 DE 9103265 U
(43) Veröffentlichungstag der Anmeldung: 23.09.1992
(73) Patentinhaber: Hewing GmbH, D-48607 Ochtrup (DE)
(72) Erfinder: Hansen,Jörg, W-4441 Wettringen (DE)
(74) Vertreter: Busse & Busse Patentanwälte

(56) Entgegenhaltungen:
- EP-A- 0 402 025
- DE-A- 2 458 311
- DE-C- 650 275
- GB-A- 1 562 566
- GB-A- 2 197 003
- US-A- 2 161 492

## Beschreibung

Die Erfindung bezieht sich auf einen Installationskanal für Versorgungsleitungen, insbesondere für Zweirohrinstallationen, nach dem Oberbegriff des Anspruchs 1.

Ausgehend von einem Installationskanal der vorstehend genannten, aus der DE-A- 24 58 311 bekannten Art liegt der Erfindung die Aufgabe zugrunde, diesen im Bereich von Zweigleitungen derart zu verbessern, daß er mit geringem Aufwand an unterschiedliche Zweigleitungen und unterschiedliche Leitungsabstände anpaßbar ist und dabei ein optisch ansprechendes Erscheinungsbild darbietet.

Die Erfindung löst diese Aufgabe durch einen Installationskanal mit den Merkmalen des Anspruchs 1. Hinsichtlich wesentlicher weiterer Ausgestaltungen wird auf die Ansprüche 2 bis 17 verwiesen.

Die Erfindung schafft für einen Installationskanal eine an beliebiger Stelle besonders einfach montierbare Abdeckhaube, die als Zubehörteil bei der Installation auf die obere Durchführöffnung der Abdeckleiste aufsetzbar und angepaßt an unterschiedliche Zweigleitungen verschließbar ist. Die mit der Abdeckleiste bündig vereinigbare Abdeckhaube schafft für den Anschlußbereich eine optisch gleichmäßige, mäßige, die Anbindungselemente verdeckende Ansicht und ist mit geringem Aufwand für einen späteren Zugriff demontierbar.

Bei einem Wandeinsatz für eine Rohrführung und -verkleidung von in einer Wand verlegten Heizungsrohren an einer Austrittsstelle (GB-A-2 197 003) ist ein Abschlußdeckel bekannt, der je nach Installationsgegebenheiten mit einer oder mehreren Durchführungsöffnungen für Rohrleitungen versehen ist.

Hinsichtlich wesentlicher weiterer Vorteile und Einzelheiten der Erfindung wird auf die nachfolgende Beschreibung und die Zeichnung verwiesen, in der ein Ausführungsbeispiel des Gegenstandes der Erfindung schematisch näher veranschaulicht ist. In der Zeichnung zeigen:
- Fig. 1: eine perspektivische, teilweise geschnittene Darstellung des erfindungsgemäßen Installationskanals mit zwei Versorgungsleitungen und zwei Zweigleitungen,
- Fig. 2: eine Draufsicht auf eine erfindungsgemäße Abdeckhaube in Einzeldarstellung,
- Fig. 3: eine Innenansicht der Abdeckhaube gemäß Fig. 2,
- Fig. 4: eine Seitenansicht der Abdeckhaube gemäß Fig. 2 und 3,
- Fig. 5: einen Schnitt durch die Abdeckhaube gemäß der Linie IV-IV in Fig. 4,
- Fig. 6: eine Draufsicht auf eine Abdeckblende gemäß der Erfindung,
- Fig. 7: einen Schnitt gemäß der Linie VI-VI in Fig. 6,
- Fig. 8: eine Draufsicht auf eine erfindungsgemäße Rohrblende, und
- Fig. 9: einen Schnitt gemäß der Linie VIII-VIII in Fig. 8.

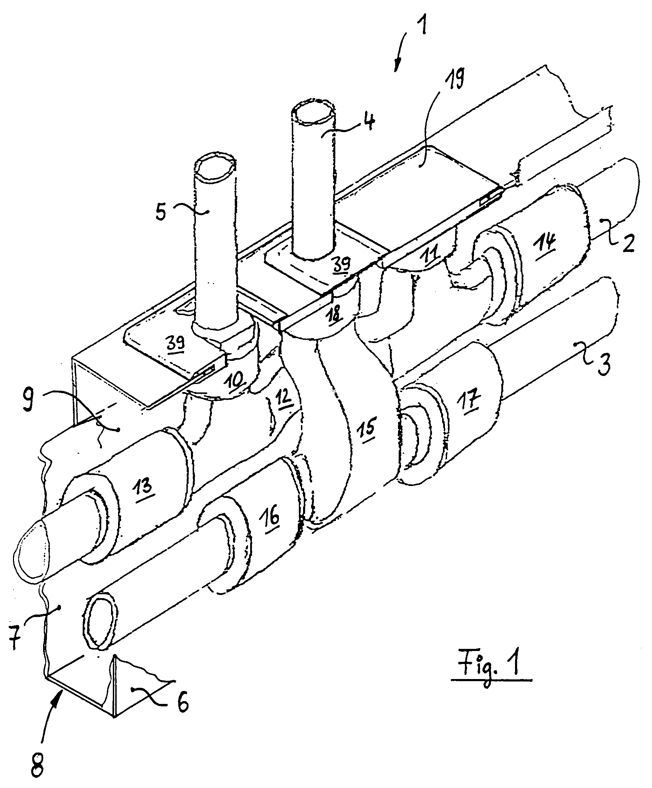

In Fig. 1 ist die als Ganzes mit 1 bezeichnete Abdeckhaube im Verbindungsbereich zweier Versorgungsleitungen 2,3 mit zwei zugeordneten Zweigleitungen 4,5 dargestellt, die beispielsweise Steigleitungen für Heizkörper bilden. Ein von einer wandseitigen Halteleiste 6 sowie einer daran befestigten Abdeckleiste 7 gebildeter Verlegekanal 8 weist dabei im Bereich der Abdeckleiste 7 eine Durchführöffnung 9 auf, die von der Abdeckhaube 1 verschlossen ist. An die Versorgungsleitung 2 sind die Zweigleitungen 4,5 über Anschlüsse 10 oder 11 bzw. 18 und Zweigrohranbindungen 12, 15 angeschlossen, die mittels Fittings 13,14,16,17 mit den Versorgungsleitungen 2,3 verbunden sind. Die Versorgungsleitung 3 weist dabei eine einfache Zweigrohranbindung 15 und die Versorgungsleitung 2 eine doppelte Zweigrohranbindung 12 auf. Die Abdeckhaube 1 ist mit einer Abdeckblende 19 versehen, die einen Durchgang für die mit den Anschlüssen 10 und 18 verbundenen Zweigleitungen 4,5 freiläßt und den nicht benötigten Anschluß 11 zweckmäßig abdeckt.

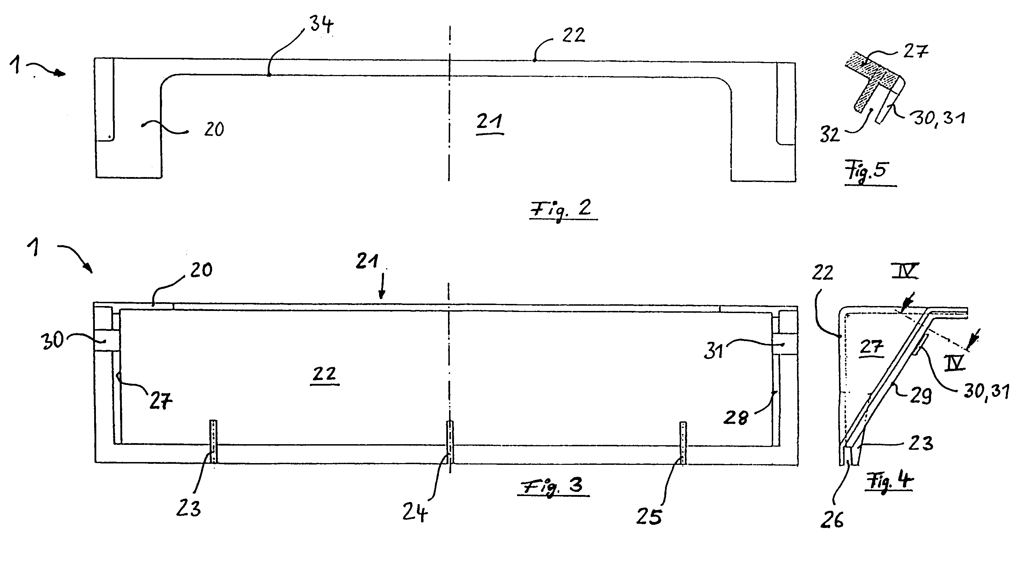

Die in den Fig. 2 bis 5 näher dargestellte Abdeckhaube 1 weist in einer oberen Durchführwand 20 eine Formausnehmung 21 auf, in die die Abdeckblende 19 einsetzbar ist.

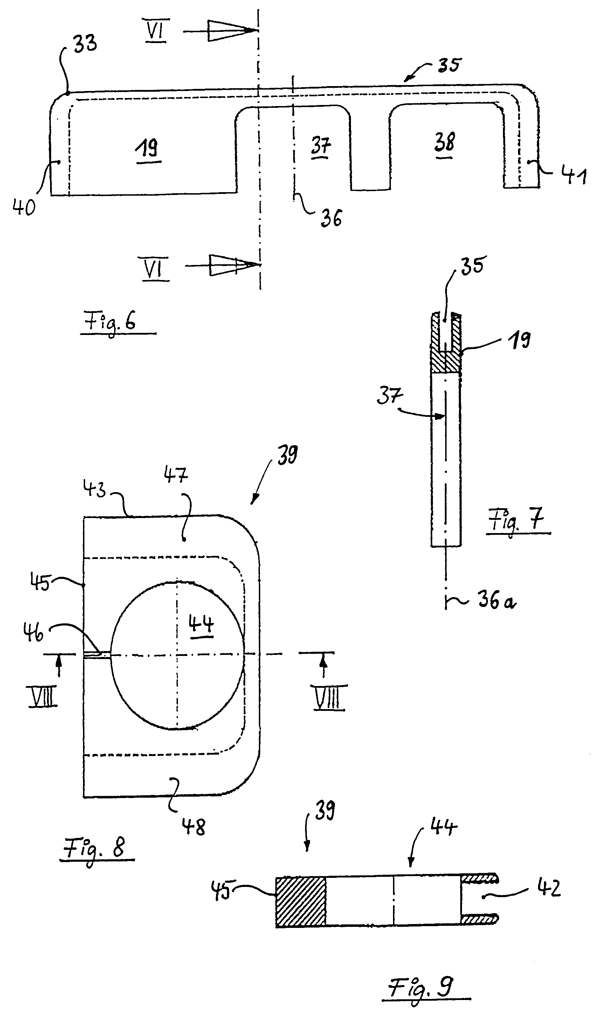

Im Bereich ihrer senkrechten Vorderwand 22 (Fig. 3) ist die Abdeckhaube 1 innenseitig mit Rastansätzen 23,24,25 versehen, die mit einer Profilausnehmung 26 (Fig. 4) im Randbereich der Durchführöffnung 9 an der Abdeckleiste 7 verrastbar sind.

Die Abdeckhaube 1 hat seitliche Abschlußwände 27,28 mit einer schrägen Randkante 29 (Fig. 4), die sich bündig auf der Abdeckleiste 7 abstützen kann. Zur Sicherung der Verbindung mit der Abdeckleiste 7 sind im Bereich der Abschlußwände 27,28 mit der Abdeckleiste 7 verbindbare Rastansätze 30,31 mit einer Formausnehmung 32 (Fig. 5) vorgesehen.

Die in Fig. 6 und 7 näher veranschaulichte Abdeckblende 19 weist eine der Formausnehmung 21 der Abdeckhaube 1 konforme Außenkontur 33 auf und hat eine sich entlang dem gesamten Verbindungsbereich erstreckende Aufnahmenut 35, in die der Rand 34 der Formausnehmung 21 der Abdeckhaube 1 eingreifen kann (Fig. 7).

Die Abdeckblende 19 weist eine symmetrisch zu einer Quermittelebene 36 angeordnete Aufnahmeöffnung 37 und eine äußere Aufnahmeöffnung 38 auf, in die jeweils eine Rohrblende 39 (Fig. 8) einsetzbar ist. Diese Anordnung der Aufnahmeöffnungen 37,38 ermöglicht einen unterschiedlichen Einsatz der Abdeckblende 19, da diese um ihre Quermittelebene 36 um 180° verdreht in zwei Betriebsstellungen verwendbar ist. Hierzu ist die Abdeckblende zu ihrer Längsmittelebene 36a symmetrisch ausgeführt.

Die Aufnahmenut 35 kann in ihren seitlichen Bereichen 40,41 eine die Verschiebbarkeit der Abdeckblende 19 in der Formausnehmung 21 der Abdeckhaube 1 ermöglichende Eingriffstiefe aufweisen.

Die in Fig. 8 und Fig. 9 näher veranschaulichte Rohrblende 39 ist mit einer der Aufnahmeöffnung 37,38 der Abdeckblende 19 konformen Außenkontur 43 ausgebildet und ist im Verbindungsbereich randseitig in eine Aufnahmenut 42 im Rand der Aufnahmeöffnung 37 bzw. 38 einsetzbar. Die Rohrblende 39 kann in einfachster Ausführung auch als Einlegeplatte ausgebildet sein, die die Aufnahmeöffnungen 37, 38 randseitig übergreift.

Für die Durchführung von Zweigleitungen weist die Rohrblende 39 eine an den Durchmesser der Zweigleitungen angepaßte mittige Bohrung 44 auf, wobei ein von der Bohrung 44 zur rückseitigen Randkante 45 verlaufender Monatageschlitz 46 vorgesehen sein kann, der ein Aufsetzen der Rohrblende 39 auf den Leitungsstrang erlaubt.

Die Rohrblende 39 ist ähnlich der Abdeckblende 19 in randseitigen Bereichen 47,48 der Aufnahmenut 42 in der Nuttiefe derart bemessen, daß eine an Montagebedingungen anpaßbare Verschiebung möglich ist.

## Patentansprüche

1. Installationskanal für Versorgungsleitungen, inbesondere für Zweirohrinstallationen, der von einer wandseitigen Halteleiste (6) sowie einer daran befestigbaren Abdeckleiste (7) gebildet ist, die für senkrechte Zweigleitungen (4,5) im oberen Bereich mit einer Durchführöffnung (9) versehen ist, **dadurch gekennzeichnet,** daß die Abdeckleiste (7) im Bereich der Durchführöffnung (9) eine Abdeckhaube (1) aufweist, die zur Anpassung an unterschiedliche Zweigrohranbindungen (12,15) mit einer oberen Formausnehmung (21) versehen ist, in die eine Abdeckblende (19) einsetzbar ist, die mehrere Rohrblenden (39) umfaßt, die jeweils in einer Aufnahmeöffnung (37,38) der Abdeckblende (19) verschiebbar abgestützt sind.

2. Installationskanal nach Anspruch 1, dadurch gekennzeichnet, daß die Abdeckhaube (1) im Bereich ihrer senkrechten Vorderwand (22) innenseitig mit auf den Randbereich der Durchführöffnung (9) in der Abdeckleiste (7) aufsetzbaren Rastansätzen (23,24,25) versehen ist.

3. Installationskanal nach Anspruch 1 oder 2, dadurch gekennzeichnet, daß die Abdeckhaube (1) seitliche Abschlußwände (27,28) aufweist, die mit schrägen Randkanten (29) ausgebildet sind.

4. Installationskanal nach Anspruch 3, dadurch gekennzeichnet, daß an den Abschlußwänden (27,28) mit der Abdeckleiste (7) verbindbare Rastansätze (30,31) ausgebildet sind.

5. Installationskanal nach einem der Ansprüche 1 bis 4, dadurch gekennzeichnet, daß die Abdeckblende (19) eine der Formausnehmung (21) konforme Außenkontur und eine zumindest bereichsweise den Rand (34) der Formausnehmung (21) der Abdeckhaube (1) aufnehmenden Aufnahmenut (35) aufweist.

6. Installationskanal nach Anspruch 5, dadurch gekennzeichnet, daß die Abdeckblende (19) mit zumindest zwei Aufnahmeöffnungen (37,38) für Rohrblenden (39) versehen ist.

7. Installationskanal nach Anspruch 5 oder 6, dadurch gekennzeichnet, daß die eine Aufnahmeöffnung (37) symmetrisch zur Quermittelebene (36) der Abdeckblende (19) angeordnet und eine zweite Aufnahmeöffnung (38) um ein Abstandsmaß zwischen Zweigleitungen (4,5) beabstandet ist.

8. Installationskanal nach einem der Ansprüche 5 bis 7, dadurch gekennzeichnet, daß die Abdeckblende (19) für den Einbau in zwei um 180° verdrehten Betriebsstellungen eine zu einer Längsmittelebene (36a) symmetrische Ausbildung aufweist.

9. Installationskanal nach einem der Ansprüche 5 bis 8, dadurch gekennzeichnet, daß die Aufnahmenut (35) eine die Verschiebbarkeit der Abdeckblende (19) in der Formausnehmung (21) ermöglichende Eingriffstiefe aufweist.

10. Installationskanal nach einem der Ansprüche 1 bis 9, dadurch gekennzeichnet, daß die Rohrblenden (39) mit einer den Aufnahmeöffnungen (37,38) der Abdeckblende (19) konformen Außenkontur versehen sind.

11. Installationskanal nach Anspruch 10, dadurch gekennzeichnet, daß die Rohrblenden (39) randseitig mit einer Aufnahmenut (42) für den Rand der Aufnahmeöffnungen (37,38) versehen sind.

12. Installationskanal nach Anspruch 10, dadurch gekennzeichnet, daß die Rohrblenden (39) als Einlegeplatte ausgebildet sind.

13. Installationskanal nach einem der Ansprüche 10 bis 12, dadurch gekennzeichnet, daß die Rohrblenden (39) mit einer an den Durchmesser der Zweigleitungen (4,5) angepaßten mittigen Bohrung (44) versehen sind.

14. Installationskanal nach einem der Ansprüche 10 bis 13, dadurch gekennzeichnet, daß die Rohrblenden (39) einen von der Bohrung (44) zu einer Randkante (45) verlaufenden Montageschlitz (46) aufweisen.

15. Installationskanal nach einem der Ansprüche 1 bis 14, dadurch gekennzeichnet, daß die Zweigleitungen (4,5) in den Bereich der Abdeckhaube (1) vorstehende Anbindungselemente (10,11,18) aufweisen.

## Claims

1. An installation duct for supply lines, particularly for twin-tube installations, which is formed by a supporting bar (6) on the wall side and, adapted to be fixed to it, a covering strip (7) which is provided in its upper part with a lead-through aperture (9) for vertical branch lines (4, 5), characterised in that the covering strip (7) has in the region of the lead-through aperture (9) a cover (1) which, for adaptation to different branch pipe connections (12, 15), is provided with an upper shaped cut-out (21) into which a covering panel (19) can be inserted which comprises a plurality of pipe surrounds (39) which are each supported for displacement in a receiving aperture (37, 38) in the cover panel (19).

2. An installation duct according to Claim 1, characterised in that the cover (1) has inside its vertical front wall (22) catch projections (23, 24, 25) which can be fitted onto the marginal portion of the lead-through aperture (9) in the covering bar (7).

3. An installation duct according to Claim 1 or 2, characterised in that the cover (1) has lateral end walls (27, 28) which are constructed with inclined edges (29).

4. An installation duct according to Claim 3, characterised in that catch projections (30, 31) are constructed on the end walls (27, 28) and can be connected to the covering bar (7).

5. An installation duct according to one of Claims 1 to 4, characterised in that the covering bar (19) has an outer contour coincident with the shapes recess (21) and the receiving groove (35) which accommodates at least portions of the edge (34) of the shaped recess (21) of the cover (1).

6. An installation duct according to Claim 5, characterised in that the covering bar (19) is provided with at least two apertures (37, 38) to accommodate pipe trims (39).

7. An installation duct according to Claim 5 or 6, characterised in that the one accommodating aperture (37) is disposed symmetrically of the transverse central plane (36) of the covering bar (19) and in that a second receiving aperture (38) is disposed at an interval the size of a gap between branch lines (4, 5).

8. An installation duct according to one of Claims 5 to 7, characterised in that the covering bar (19) is constructed to be symmetrical in respect of a longitudinal central plane (36a) so that it can be installed in two operating positions which are rotated through 180°.

9. An installation duct according to one of Claims 5 to 8, characterised in that the receiving groove (35) offers a depth of engagement which allows displaceability of the covering bar (19) in the shaped recess (21).

10. An installation duct according to one of Claims 1 to 9, characterised in that the outer contours of the pipe facings or trims (39) conform to one of the receiving apertures (37, 38) of the covering bar (19).

11. An installation duct according to Claim 10, characterised in that the pipe facings (39) have at their edges a receiving groove (42) to accommodate the edge of the receiving apertures (37, 38).

12. An installation duct according to Claim 10, characterised in that the pipe facings (39) are constructed as an inlaid plate.

13. An installation duct according to one of Claims 10 to 12, characterised in that the pipe facings (39) have a central bore (44) adapted to the diameter of the branch lines (4, 5).

14. An installation duct according to one of Claims 10 to 13, characterised in that the pipe facings (39) have an assembly slot (46) extending from the bore (44) to an edge (45).

15. An installation duct according to one of Claims 1 to 14, characterised in that the branch lines (4, 5) have connecting elements (10, 11, 18) which project into the area of the cover (1).

## Revendications

1. Canal d'installation pour conduites d'alimentation, en particulier pour les installations à deux tuyaux, constitué par un profilé de maintien (6) du côté du mur et par un bandeau de recouvrement (7) pouvant y être fixé et qui présente dans sa zone supérieure une ouverture de passage (9) destinée à des conduites de branchement verticales (4, 5), caractérisé en ce que le bandeau de recouvrement (7) présente, dans la zone de l'ouverture de passage (9), un capot de recouvrement (1) qui, pour s'adapter à différentes liaisons de branchement (12, 15), présente une échancrure supérieure (21) dans laquelle peut être placé un cache de recouvrement (19) qui comprend plusieurs plaques de passage de tuyaux (39) qui sont montées chacune dans une ouverture de réception (37, 38) du cache de recouvrement (19) de façon à pouvoir être décalées.

2. Canal d'installation suivant la revendication 1, caractérisé en ce que le capot de recouvrement (1) est pourvu, près de sa paroi verticale avant (22), du côté intérieur, de saillies d'arrêt (23, 24, 25) pouvant être amenées sur la partie périphérique de l'ouverture de passage (9) prévue dans le bandeau de recouvrement (7).

3. Canal d'installation suivant la revendication 1 ou 2, caractérisé en ce que le capot de recouvrement (1) présente des parois terminales latérales (27, 28) qui sont réalisées avec des bords périphériques obliques (29).

4. Canal d'installation suivant la revendication 3, caractérisé en ce que les parois terminales (27, 28) possèdent des saillies d'arrêt (30, 31) qui peuvent être reliées au bandeau de recouvrement (7).

5. Canal d'installation suivant l'une quelconque des revendications 1 à 4, caractérisé en ce que le cache de recouvrement (19) présente un contour extérieur correspondant à l'échancrure (21) et une encoche de réception (35) dans laquelle est logé, tout au moins pour certaines parties, le bord (34) de l'échancrure (21) du capot de recouvrement (1).

6. Canal d'installation suivant la revendication 5, caractérisé en ce que le cache de recouvrement (19) est pourvu d'au moins deux ouvertures de réception (37, 38) pour des plaques de passage de tuyaux (39).

7. Canal d'installation suivant la revendication 5 ou 6, caractérisé en ce que l'une des ouvertures de réception (37) est placée symétriquement par rapport au plan médian transversal (36) du cache de recouvrement (19) et l'autre ouverture de réception (38) en est éloignée d'un pas d'écartement entre conduites de branchement (4, 5).

8. Canal d'installation suivant l'une quelconque des revendications 5 à 7, caractérisé en ce que le cache de recouvrement (19) est symétrique par rapport à un plan médian longitudinal (36a) en vue de son montage dans deux positions de service différant l'une de l'autre par une rotation de 180°.

9. Canal d'installation suivant l'une quelconque des revendications 5 à 8, caractérisé en ce que l'encoche de réception (35) présente une profondeur de prise qui permet de décaler le cache de recouvrement (19) dans l'échancrure (21).

10. Canal d'installation suivant l'une quelconque des revendications 1 à 9, caractérisé en ce que les plaques de passage de tuyaux (39) présentent un contour extérieur qui correspond aux ouvertures de réception (37, 38) du cache de recouvrement (19).

11. Canal d'installation suivant la revendication 10, caractérisé en ce que les plaques de passage de tuyaux (39) présentent, du côté du bord, une encoche de réception (42) destinée au bord des ouvertures de réception (37, 38).

12. Canal d'installation suivant la revendication 10, caractérisé en ce que les plaques de passage de tuyaux (39) sont réalisées sous la forme de plaques à insérer.

13. Canal d'installation suivant l'une quelconque des revendications 10 à 12, caractérisé en ce que les plaques de passage de tuyaux (39) présentent un trou central (44) adapté au diamètre des conduites de branchement (4, 5).

14. Canal d'installation suivant l'une quelconque des revendications 10 à 13, caractérisé en ce que les plaques de passage de tuyaux (39) présentent une fente de montage (46) qui va du trou (44) à un bord périphérique (45).

15. Canal d'installation suivant l'une quelconque des revendications 1 à 14, caractérisé en ce que les conduites de branchement (4, 5) présentent des éléments de raccordement (10, 11, 18) qui font saillie dans l'espace du capot de recouvrement (1).
